Europäisches Patentamt

European Patent Office

Office européen des brevets

(19)

(11) Numéro de publication : **0 344 217 B1**

(12) **FASCICULE DE BREVET EUROPEEN**

(45) Date de publication du fascicule du brevet :
26.08.92 Bulletin 92/35

(51) Int. Cl.$^5$ : **F16L 58/18, F16L 47/06**

(21) Numéro de dépôt : **88905177.7**

(22) Date de dépôt : **02.06.88**

(86) Numéro de dépôt international :
**PCT/FR88/00275**

(87) Numéro de publication internationale :
**WO 88/09898 15.12.88 Gazette 88/27**

(54) **RACCORD POUR TUBES EN MATERIAUX COMPOSITES.**

(30) Priorité : **05.06.87 FR 8707908**

(43) Date de publication de la demande :
**06.12.89 Bulletin 89/49**

(45) Mention de la délivrance du brevet :
**26.08.92 Bulletin 92/35**

(84) Etats contractants désignés :
**AT BE CH DE GB IT LI LU NL SE**

(56) Documents cités :
**EP-A- 0 163 957**
**DE-A- 1 525 712**
**DE-C- 872 706**
**DE-U- 1 880 989**
**US-A- 609 030**
**US-A- 2 261 566**
**US-A- 4 366 971**

(73) Titulaire : **SOCIETE NATIONALE ELF AQUITAINE (PRODUCTION)**
**Tour Elf, 2, Place de la Coupole, La Défense 6**
**F-92400 Courbevoie (FR)**

(72) Inventeur : **FOURNIE, René**
**Les Chênes-Verts Rue Robert-Schumann**
**F-31800 Saint-Gaudens (FR)**

(74) Mandataire : **Rames, Michel**
**Société Nationale Elf Aquitaine Departement**
**Propriété Industrielle Tour Elf**
**F-92078 Paris la Défense - Cedex 45 (FR)**

## Description

L'invention est relative aux raccords pour matériels tubulaires en matériaux composites.

Les tubes de fabrication commerciale en matériaux composites pour des pressions de 2000-3000 psi (95 760 - 143 640 Pa) sont raccordés par des filetages réalisés dans le même matériau.

Les tubes sont fabriqués à partir de résines et par enroulement filamentaire de fibre de verre aux extrémités desquelles les étanchéités sont assurées par filetage conique entre le tube et un manchon de liaison.

Les filetages sur le tube sont soit usinés directement sur le matériau, soit surmoulés après préusinage de l'extrémité.

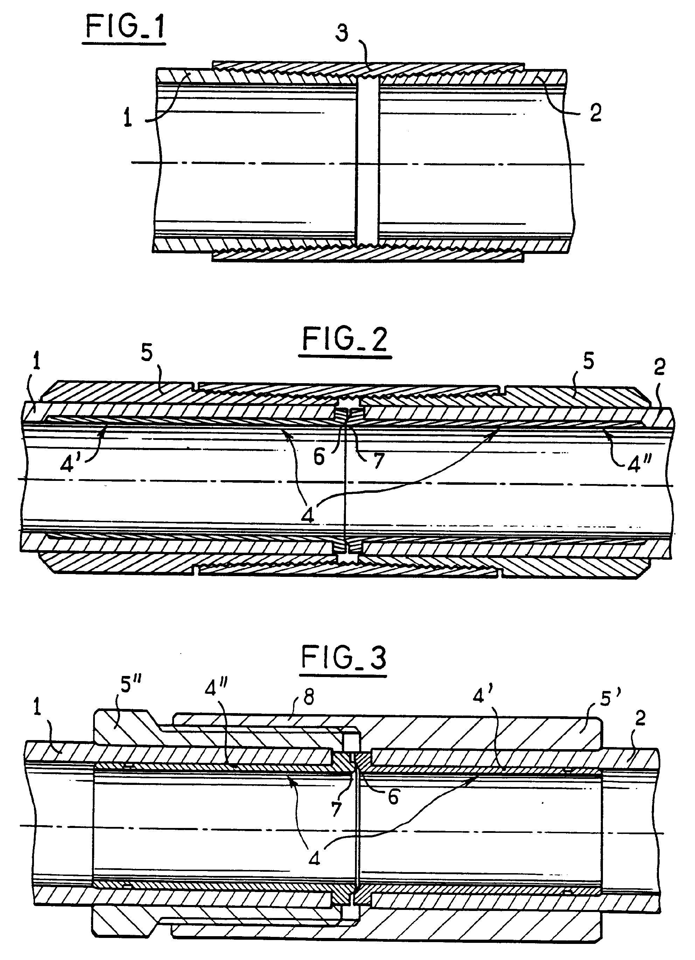

Les manchons sont réalisés de deux manières : soit par usinage simple de coupons de longueur suffisante, soit surmoulés sur un mandrin usiné selon le filetage requis comme cela est montré sur la figure 1.

Lorsque ces assemblages tubes raccords sont soumis soit à température ambiante, soit à des températures plus élevées mais inférieures à la température maximale d'utilisation des composites, à des régimes de contraintes, il se révèle de nombreuses déficiences dans la tenue de l'assemblage. Les déficiences se manifestent essentiellement lorsque ces assemblages sont soumis à des contraintes simultanées de pression et de traction.

Les défauts et souvent la ruine de ces assemblages sont liés :

– aux contraintes de serrage pour obtenir l'étanchéité sur filetage conique.

Ces contraintes engendrent des tensions de cisaillement qui altèrent la paroi du manchon et provoquent une fissuration et une fuite.

– aux contraintes de traction conduisant à un arrachement des filetages surmoulés et à la rupture de l'assemblage.

Dans la majorité des cas ayant fait l'objet d'essais spéciaux en pression et traction, on a constaté la ruine de ces assemblages alors que le tube lui-même présentait un bon comportement.

Le document US-A-4,366,971 décrit un ensemble de raccord pour deux tubes, chaque extrémité des tubes comportant une chemise interne et une chemise externe, et un moyen de raccordement fileté entre les deux chemises externes.

La présente invention a pour but de remédier aux précédents inconvénients en dissociant la zone d'étanchéité de la zone de transmission des efforts alors que dans les matériels actuellement disponibles, ces deux zones sont rassemblées sur le filetage du manchon en matériau composite.

Pour ce faire, l'invention propose un ensemble de raccord pour tubes comprenant deux tubes munis chacun d'une extrémité à raccorder, chaque extrémité comportant une chemise interne en métal fixée et collée de façon étanche sur la surface intérieure du tube et une chemise externe en métal et un moyen de raccordement fileté entre les deux chemises externes, caractérisé en ce que les deux tubes sont en matériaux composites, la chemise externe étant emmanchée à chaud et collée sur la surface externe du tube, chaque chemise interne étant munie d'une projection annulaire qui s'étend radialement vers l'extérieur du tube adjacent à l'extrémité de ce dernier, les deux projections étant aptes à coopérer ensemble lors du raccordement des deux tubes afin d'assurer l'étanchéité entre les deux tubes.

Suivant un mode préférentiel de réalisation, le moyen d'étanchéité entre les deux chemises internes, notamment entre leurs extrémités respectives orientées l'une vers l'autre, est constituée par une portée conique et une partie sphérique coopérant entre elles.

Dans certaines réalisations, le moyen de raccordement entre les deux chemises externes est constitué par un manchon fileté dont les filetages femelles symétriques correspondent à des filetages mâles tracés sur chacune des chemises.

Dans d'autres réalisations, le moyen de raccordement entre les deux chemises externes consiste en ce qu'une première chemise externe est prolongée par une chemise femelle munie d'un pas de vis interne et une seconde chemise externe est munie sur son contour extrême d'un pas de vis mâle apte à être vissé dans le pas de vis femelle de la première chemise.

Deux modes de réalisation sont exposés ci-après en référence aux dessins annexés, ils sont donnés à titre d'exemples et ne limitent pas l'étendue de l'invention.

La figure 1 montre l'état actuel de la technique.

La figure 2 montre une réalisation avec raccord.

La figure 3 montre une réalisation avec un embout mâle et un manchon femelle.

En se référant à la figure 1 on distingue les extrémités de deux tubes 1 et 2 en matériau composite raccordés par un manchon 3 dans le même matériau ou dans un matériau similaire.

Les extrémités des tubes 1 et 2 portent des filetages mâles surmoulés sur le tube et le manchon 3 porte des filetages femelles usinés ou moulés. Ce sont des raccords qui ont conduit à des ruptures comme cela a été indiqué précédemment.

La figure 2 montre un raccord selon l'invention entre deux tubes en matériaux composites 1 et 2. Chaque extrémité de tube 1 et 2 est munie d'une chemise interne 4 ajustée au diamètre intérieur du tube et collée et d'une chemise externe 5 ou frette, emmanchée à chaud et collée. Un manchon fileté 3 constitue le moyen de raccordement entre les deux chemises externes alors que l'association d'une partie conique 6 d'une chemise interne avec une partie sphérique 7 de l'autre chemise interne constitue le moyen d'étanchéité. Les chemises interne et externe et le raccord 3 sont en acier et les filetages sont usinés par les moyens conventionnels.

La figure 3 montre un autre raccord selon l'invention entre deux tubes en matériaux composites 1 et 2. Chaque extrémité des tubes 1 et 2 est bien munie d'une chemise interne 4 ajustée au diamètre intérieur du tube et collée alors que les extrémités externes portent des frettes ou chemises emmanchées à chaud et collées dont l'une 5′ est prolongée par une chemise femelle 8 munie d'un pas de vis interne et l'autre 5″ est munie sur son contour externe d'un pas de vis mâle apte à être vissé dans le pas de vis femelle de la chemise 8. Ce filetage constitue la zone de transmission des efforts alors que l'association d'une partie conique 6 d'une chemise interne 4′ avec une partie sphérique 7 de l'autre chemise interne 4″ constitue le moyen d'étanchéité. Les chemises internes et externes sont en acier non corridable, les chemises externes étant en acier ordinaire au carbone et les filetages sont usinés par des moyens conventionels.

Dans la réalisation de l'étanchéité, deux méthodes sont disponibles :

– soit l'insertion de la chemise dans le tube à la fabrication avec enroulement filamentaire sur ladite chemise, comme sur la figure 2.

– soit, après fabrication du tube, par adjonction de la chemise et collage de cette dernière en son extrémité, comme sur la figure 3.

## Revendications

1 - Ensemble de raccord pour tubes comprenant deux tubes munis chacun d'une extrémité à raccorder, chaque ,extrémité comportant une chemise interne (4) en métal fixée et collée de façon étanche sur la surface intérieure du tube et une chemise externe en métal (5), et un moyen de raccordement fileté entre les deux chemises externes, caractérisé en ce que les deux tubes sont en matériaux composites, la chemise externe (5) étant emmanchée à chaud et collée sur la surface externe du tube, chaque chemise interne (4) étant munie d'une projection annulaire qui s'étend radialement vers l'extérieur du tube adjacent à l'extrémité de ce dernier, les deux projections étant aptes à coopérer ensemble lors du raccordement des deux tubes afin d'assurer l'étanchéité entre les deux tubes.

2 - Ensemble de raccord selon la revendication 1 caractérisé en ce que l'une des projections est munie d'une surface conique (6) et l'autre projection est munie d'une surface (7) ayant une section sensiblement semi-circulaire, les deux surfaces (6,7) coopérant, lors du raccordement des deux tubes, afin d'assurer l'étanchéité entre les deux tubes.

3 - Raccord selon la revendication 1 dans lequel le moyen de raccordement entre les deux chemises externes est constitué par un manchon fileté dont les filetages femelles symétriques correspondent à des filetages mâles tracés sur chacune des chemises.

4 - Raccord selon la revendication 1 dans lequel le moyen de raccordement entre les deux chemises externes consiste en ce qu'une première chemise externe est prolongée par une chemise femelle munie d'un pas de vis interne et une seconde chemise externe est munie sur son contour externe d'un pas de vis mâle apte à être vissé dans le pas de vis femelle de la première chemise.

## Patentansprüche

1. Kupplungsanordnung für Rohre

– mit zwei Rohren, von denen jedes mit einem Kupplungsende versehen ist, wobei jedes Ende ein Innenfutter (4) aus Metall, das durch Kleben dicht auf der Innenfläche des Rohrs befestigt ist, und einen äußeren Mantel (5) aus Metall aufweist, und

– mit einer Gewindekupplungseinrichtung zwischen den zwei äußeren Mänteln, dadurch gekennzeichnet, daß die zwei Rohre aus Verbundmaterialien bestehen,

– wobei der äußere Mantel (5) auf die Rohraußenfläche wärmeaufgeschrumpft und aufgeklebt ist,

– wobei jedes Innenfutter (4) mit einem ringförmigen Vorsprung versehen ist, der sich radial zum Äußeren der Rohrs hin angrenzend an das Ende des letzteren erstreckt,

– wobei die zwei Vorsprünge geeignet sind, bei der Kupplung der zwei Rohre zusammenzuwirken, um die Abdichtung zwischen den zwei Rohren sicherzustellen.

2. Kupplungsanordnung nach Anspruch 1, dadurch gekennzeichnet, daß einer der Vorsprünge mit einer konischen Oberfläche (6) und der andere Vorsprung mit einer Oberfläche (7) versehen ist, die einen im wesentlichen halbkreisförmigen Abschnitt hat, wobei die zwei Oberflächen (6, 7) bei der Kupplung der zwei Rohre zusammenwirken, um die Abdichtung zwischen den zwei Rohren sicherzustellen.

3. Kupplung nach Anspruch 1, bei welcher die Kupplungseinrichtung zwischen den zwei äußeren Mänteln von einer Gewindebuchse gebildet ist, deren symmetrische weibliche Gewindegänge den in jeden der Mäntel geschnittenen männlichen Gewindegängen entsprechen.

4. Kupplung nach Anspruch 1, bei welcher die Kupplungseinrichtung zwischen den zwei äußeren Mänteln darin besteht, daß ein erster äußerer Mantel durch einen mit einem Innengewinde versehenen weiblichen Mantel verlängert und ein zweiter äußerer Mantel auf seiner Außenkontur mit einem männlichen Gewindegang versehen ist, der in den weiblichen Gewindegang des ersten Mantels einschraubbar ist.

## Claims

1. Connection assembly for tubes comprising two tubes each provided with a connection end, each end comprising an inner metal casing (4) which is secured and bonded in a leaktight manner to the inner surface of the tube and an outer metal casing (5), and a threaded means for connecting the two outer casings, characterised in that the two tubes are made from composite materials, the outer casing (5) being fitted hot and bonded to the outer surface of the tube, each inner casing (4) being provided with an annular projection extending radially towards the exterior of the tube adjacent the end thereof, the two projections being suitable for cooperating when the two tubes are connected in order to ensure leaktightness between the two tubes.

2. Connection assembly according to Claim 1, characterised in that one of the projections is provided with a conical surface (6) and the other projection is provided with a surface (7) having a substantially semi-circular cross-section, the two surfaces (6, 7) cooperating when the two tubes are connected in order to ensure leaktightness between the two tubes.

3. Connection according to Claim 1, wherein the means for connecting the two outer casings is comprised of a threaded sleeve of which the symmetrical female threads correspond to male threads marked on each of the casings.

4. Connection according to Claim 1, wherein the means for connecting the two outer casings consists in that a first outer casing is extended by a female casing provided with an internal screw thread and a second external casing is provided over its outer contour with a male screw thread suitable for being screwed into the female screw thread of the first casing.

## FIG_1

## FIG_2

## FIG_3